# EUROPEAN PATENT APPLICATION

(11) **EP 4 729 263 A2**
(43) Date of publication of application: **22.04.2026**
(21) Application number: 25203133.1
(22) Date of filing: 18.09.2025
(51) Int. Cl.: B29B 7/48, B29B 7/72, B29C 48/00, B29C 48/405, B29C 48/68, H01M 4/04

(54) **EXTRUDER**

(30) Priority: 17.10.2024 KR 20240141888
(71) Applicant: Samsung SDI Co., Ltd., Yongin-si, Gyeongsangnam-do 17084 (KR)
(72) Inventor: HWANG, Yeyeong, 17084 Yongin-Si Gyeonggi-do (KR); LEE, Hansol, 17084 Yongin-Si Gyeonggi-do (KR); CHO, Chaewoong, 17084 Yongin-Si Gyeonggi-do (KR); JANG, Kyeongho, 17084 Yongin-Si Gyeonggi-do (KR); MOON, Jeunggi, 17084 Yongin-Si Gyeonggi-do (KR); AHN, Hyejin, 17084 Yongin-Si Gyeonggi-do (KR)
(74) Representative: Gulde & Partner

(57) **Abstract**

An extruder (10) includes: a supply module (100); a mixing module (200) to form an electrode slurry (30) by mixing an active material, a binder, and a conductive material from the supply module (100); a discharge module (300) to discharge the electrode slurry (30); and a sensor (250) to measure a characteristic value of the electrode slurry (30). The mixing module (200) includes a first screw (211) and a second screw (212), the first screw (211) and the second screw (212) including screw threads (211b, 212b) on an outer circumference thereof to rotate to engage with each other; a barrel (220) including a first barrel (220_1) and a second barrel (220_2) accommodating the first screw (211) and the second screw (212), respectively, and facing each other to form a hole through which the electrode slurry (30) is transmitted; a first gap adjustment module (240) to adjust a gap between the first barrel (220_1) and the second barrel (220_2); and a control module (500) to control the first gap adjustment module (240) based on the measured characteristic value.

## Description

### BACKGROUND

### 1. Field

Aspects of embodiments of the present disclosure relate to an extruder capable of forming an electrode slurry.

### 2. Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

An electrode of a secondary battery may be formed by coating an electrode slurry mixed with an active material, a conductive material, and a binder onto a substrate formed of metals and/or the like. An extruder may be used for manufacturing the electrode slurry.

The above information disclosed in this Background section is for enhancement of understanding of the background of the present disclosure, and therefore, it may contain information that does not constitute related (or prior) art.

### SUMMARY

An extruder may be a device that discharges an electrode slurry by mixing an active material, a conductive material, a binder, and a solvent supplied to the inside of a barrel by rotation of a screw. A characteristic of the electrode slurry may be determined by gaps between the screws and the barrels. However, a difference between a characteristic value of the electrode slurry and a desired characteristic value may occur by the gaps between the screws and the barrels, which may reduce the quality of the electrode manufactured by using the electrode slurry.

Embodiments of the present disclosure may be directed to an extruder capable of forming an electrode slurry by mixing an active material, a binder, a conductive material, and the like, the mixed slurry having a desired quality.

These and other aspects and features of the present disclosure will be described in or will be apparent from the following description of embodiments of the present disclosure.

According to one or more embodiments of the present disclosure, an extruder includes: a supply module configured to supply an active material, a binder, and a conductive material; a mixing module configured to form an electrode slurry by mixing the active material, the binder, and the conductive material supplied from the supply module; a discharge module configured to discharge the electrode slurry; and a sensor configured to measure a characteristic value of the electrode slurry. The mixing module includes: a first screw and a second screw parallel to each other in a longitudinal direction of the mixing module, the first screw and the second screw respectively including a screw thread on an outer circumference thereof configured to rotate to engage with the other screw thread; a barrel including a first barrel and a second barrel accommodating the first screw and the second screw, respectively, and facing each other in a height direction of the mixing module to form a hole through which the electrode slurry is transmitted; a first gap adjustment module configured to adjust a gap between the first barrel and the second barrel in the height direction of the mixing module; and a control module configured to control the first gap adjustment module based on the measured characteristic value. Hence, by adapting the size of the first gap, the slurry properties resulting from the mixing can be favorably influenced in an easy manner.

In an embodiment, the barrel may further include: a first area adjacent to the supply module; a third area adjacent to the discharge module; and a second area between the first area and the third area. An advantage of this embodiment may be that allocating different sub-areas can provide more nuanced control of the slurry properties resulting from the mixing.

In an embodiment, the sensor may include a first sensor configured to measure a first characteristic value of the electrode slurry transmitted through the hole of the barrel. The first characteristic value may include at least one of a pressure value or a temperature value. An advantage of this embodiment may be that the first characteristic can be measured in situ, further facilitating the control of the slurry properties resulting from the mixing.

In an embodiment, the first sensor may include a 1_1 sensor (or first sub-sensor) configured to measure the first characteristic value of the electrode slurry transmitted through the hole of or in the first area. The first sensor may include a 1_2 sensor (or second sub-sensor) configured to measure the first characteristic value of the electrode slurry transmitted through the hole of or in the second area. The first sensor may include a 1_3 sensor (or third sub-sensor) configured to measure the first characteristic value of the electrode slurry transmitted through the hole of or in the third area. An advantage of this embodiment may be that measuring the first characteristic in different locations, i.e. different of the sub-areas, may facilitate an even more nuanced control of the slurry properties resulting from the mixing.

In an embodiment, the control module may be configured to compare the first characteristic value measured by the 1_1 sensor with a reference value. The control module may be configured to, based on a result of the comparison between the first characteristic value measured by the 1_1 sensor and the reference value, transmit a control signal to the first gap adjustment module to change the gap between the first barrel and the second barrel in the first area. An advantage of this embodiment may be that the first characteristic can be specifically influenced in the respective sub-area.

In an embodiment, the control module may be configured to compare the first characteristic value measured by the 1_2 sensor with a reference value. The control module may be configured to, based on a result of the compare between the first characteristic value measured by the 1_2 sensor and the reference value, transmit a control signal to the first gap adjustment module to change the gap between the first barrel and the second barrel in the second area. An advantage of this embodiment may be that the first characteristic can be specifically influenced in the respective sub-area.

In an embodiment, the control module may be configured to compare the first characteristic value measured by the 1_3 sensor with a reference value. The control module may be configured to, based on a result of the compare between the first characteristic value measured by the 1_3 sensor and the reference value, transmit a control signal to the first gap adjustment module to change the gap between the first barrel and the second barrel in the third area. An advantage of this embodiment may be that the first characteristic can be specifically influenced in the respective sub-area.

In an embodiment, the sensor may include a second sensor configured to measure a second characteristic value of the electrode slurry discharged from the discharge module. The second characteristic value may include at least one of a particle size, a viscosity value, a density value and a temperature value. An advantage of this embodiment may be that more than one characteristic can be measured in situ, further facilitating the control of the slurry properties resulting from the mixing.

In an embodiment, the control module may be configured to compare the second characteristic value measured by the second sensor with a reference value The control module may be configured to, based on a result of the comparison between the second characteristic value measured by the second sensor and the reference value, transmit a control signal to the first gap adjustment module to change the gap between the first barrel and the second barrel in the second area. An advantage of this embodiment may be that more than one characteristic can be considered when adjusting the gap, further facilitating the quality improvement.

In an embodiment, the control module may be configured to compare the second characteristic value measured by the second sensor with a reference value. The control module may be configured to, based on a result of the comparison between the second characteristic value measured by the second sensor and the reference value, transmit a control signal to the first gap adjustment module to change the gap between the first barrel and the second barrel in the third area. An advantage of this embodiment may be that the slurry quality can be specifically influenced in the respective sub-area considering the second characteristic value.

In an embodiment, the extruder may further include a tank. The tank may be configured to accommodate the electrode slurry discharged from the discharge module. The sensor may further include a third sensor configured to measure a third characteristic value of the electrode slurry accommodated in the tank. The third characteristic value may include a weight value. An advantage of this embodiment may be that yet another characteristic can be measured in situ, even further facilitating the control of the slurry properties resulting from the mixing.

In an embodiment, the control module may be configured to compare the third characteristic value measured by the third sensor with a reference value. The control module may be configured to, based on a result of the compare between the third characteristic value measured by the third sensor and the reference value, transmit a control signal to the first gap adjustment module to change a gap between the first barrel and the second barrel in the third area. An advantage of this embodiment may be that the slurry quality can be specifically influenced in the respective sub-area considering the third characteristic value.

In an embodiment, the first barrel may include a 1_1 barrel (or first barrel part) and a 1_2 barrel (or second barrel part) facing each other in a width direction of the mixing module. The second barrel may include a 2_1 barrel (or first barrel part) and a 2_2 barrel (or second barrel part) facing each other in the width direction of the mixing module. The screws may be arranged one after the other in the width direction. The screws may extend perpendicular to the width direction. The first and second barrel parts may be arranged one after the other in the width direction. The first and second barrels may be arranged one after the other perpendicular to the width direction and/or to direction in which the screws, e.g. their longitudinal axes, extend. An advantage of this embodiment may be that that a barrel comprising four barrel parts can be adapted to process requirements like gaps between barrel parts in a more flexible manner, potentially facilitating a better special quality control in two perpendicular directions like the width and height directions (Z and Y in the enclosed figures).

In an embodiment, the extruder may further include a second gap adjustment module. The second gap adjustment module may be configured to adjust a gap between the 1_1 barrel and the 1_2 barrel in the width direction of the mixing module. The second gap adjustment module may be configured to adjust a gap between the 2_1 barrel and the 2_2 barrel in the width direction of the mixing module. The control module may be configured to control the second gap adjustment module based on the measured characteristic value. The measured characteristic value may be measured by one of the first to third sensors. An advantage of this embodiment may be that as the size of more gaps can be changed, influencing the slurry quality can be further facilitated.

In an embodiment, the hole of the barrel may include a first hole (or first hole part or first hole section) accommodating the first screw. The hole of the barrel may include a second hole (or second hole part or second hole section) accommodating the second screw. The first hole and the second hole may be connected to each other in an area where the first screw and the second screw engage with each other. The first hole and the second hole may continuously form at least a part of the hole. An advantage of this embodiment may be that dividing the hole in first and second hole parts can improve guiding the slurry by the screw threads in cooperation with walls of the barrel delimiting the hole or hole parts during mixing.

According to one or more embodiments of the present disclosure, an extruder may include at least selected of: a supply module configured to supply an active material, a binder, and a conductive material; a mixing module configured to form an electrode slurry by mixing the active material, the binder, and the conductive material supplied from the supply module; a discharge module configured to discharge the electrode slurry; and a sensor configured to measure a characteristic value of the electrode slurry. The mixing module may include a pair of screws parallel to each other in a longitudinal direction of the mixing module. The pair of screws may have screw threads at an outer circumference thereof. The screw threads may be configured to rotate to engage or interlace each other. The mixing module may include a barrel. The barrel may accommodate the pair of screws. The barrel may have a hole through which the electrode slurry is transmitted. The barrel may be configured to adjust a clearance between the pair of screws and an inner circumference of the hole. The mixing module may include a control module configured to control the barrel to adjust the clearance based on the measured characteristic value. The barrel may include a first area adjacent to the supply module. The barrel may include a third area adjacent to the discharge module. The barrel may include a second area between the first area and the third area. The control module may be configured to control the barrel to adjust the clearance in at least one of the first area, the second area, and the third area based on the measured characteristic value. Hence, by adjusting the clearance, the slurry properties resulting from the mixing can be favorably influenced in an easy manner.

In an embodiment, the sensor may be configured to measure a pressure value of the electrode slurry. The control module may be configured to control the barrel to increase the clearance in the first area based on the pressure value of the second area being smaller than a reference pressure value. An advantage of this embodiment may be that by controlling the pressure overheating of the slurry during mixing can be avoided early.

In an embodiment, the sensor may be configured to measure a temperature value of the electrode slurry. The control module may be configured to control the barrel to increase the clearance in the second area or the third area based on the temperature value in the second area or the third area being greater than a reference temperature value. An advantage of this embodiment may be that overheating of the slurry during mixing can be avoided.

In an embodiment, the sensor may be configured to measure a viscosity value of the electrode slurry. The control module may be configured to control the barrel to decrease the clearance in the second area or the third area based on the viscosity value in the second area or the third area being greater than a reference viscosity value. An advantage of this embodiment may be that the mixing can be facilitated for slurries having different viscosities.

In an embodiment, the sensor may be configured to measure a particle size of the electrode slurry. The control module may be configured to control the barrel to increase the clearance in the second area or the third area based on the particle size in the second area or the third area being greater than a reference particle size. An advantage of this embodiment may be that the mixing can be facilitated for slurries having different particle sizes.

According to some embodiments of the present disclosure, an extruder may be provided for improving the quality of an electrode slurry formed by mixing an active material, a binder, and a conductive material.

According to some embodiments of the present disclosure, an extruder capable of evenly distributing an electrode slurry may be provided by setting a shear force applied to an electrode slurry by adjusting a clearance corresponding to a gap between an inner circumference of a barrel of a mixing module and a screw.

According to some embodiments of the present disclosure, a physical property value of a finally manufactured electrode slurry may be set by measuring the physical property value of the electrode slurry using a sensor mounted in an extruder, and adjusting a clearance according to the measured physical property value.

The first barrel and the second barrel may be first and second barrel parts. The sensor may be designated as sensor device or sensor array.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a view illustrating an example of an extruder according to some embodiments of the present disclosure;
FIG. 2 is a cross-sectional view illustrating an example of a mixing module according to some embodiments of the present disclosure;
FIG. 3 is a cross-sectional view taken along the line A-A of FIG. 2 before a gap between a first barrel and a second barrel increases;
FIG. 4 is a cross-sectional view taken along the line A-A of FIG. 2 after a gap between the first barrel and the second barrel increases;
FIG. 5 is a view illustrating an example in which a first screw and a second screw are arranged according to some embodiments of the present disclosure;
FIG. 6 is a view illustrating an example of a control module electrically connected to a first sensor and a first gap adjustment module according to some embodiments of the present disclosure;
FIG. 7 is a graph of experiment data indicating a viscosity of an electrode slurry according to a gap between a first barrel and a second barrel according to some embodiments of the present disclosure;
FIG. 8 is a view illustrating an example of an extruder including a second sensor and a third sensor according to some embodiments of the present disclosure;
FIG. 9 is a view illustrating an example of a control module electrically connected to a second sensor, a third sensor, and a first gap adjustment module according to some embodiments of the present disclosure;
FIG. 10 is a view illustrating an example of an extruder further including a second gap adjustment module according to some embodiments of the present disclosure; and
FIG. 11 is a view illustrating an example of an extruder including a multi-layered mixing module according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor may be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various modifications that may replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The sizes of layers and areas illustrated in the drawings may be exaggerated for convenience of illustration. As such, the present disclosure is not limited to the sizes of the layers and the areas illustrated in the drawings. Like reference numerals in the drawings denote like elements throughout the specification.

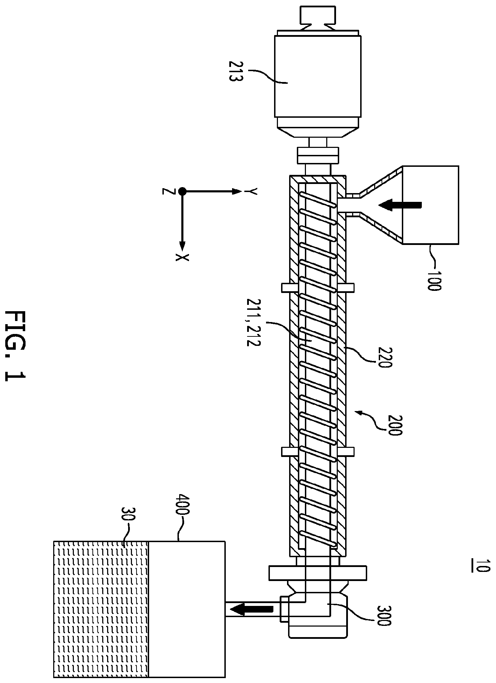

FIG. 1 is a view illustrating an example of an extruder according to some embodiments of the present disclosure.

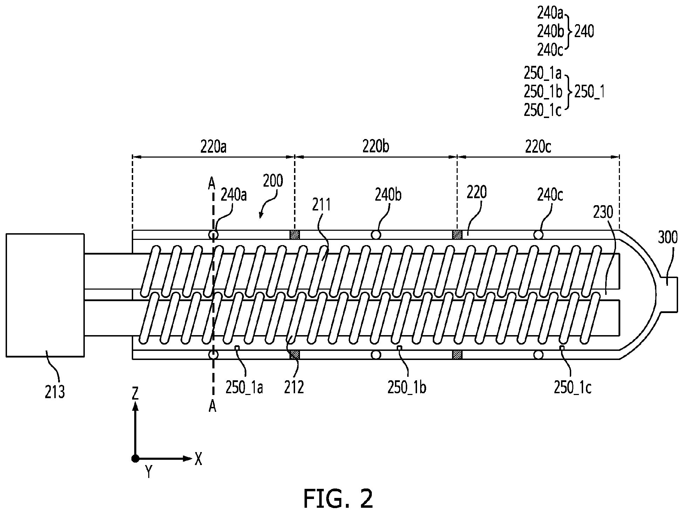

Referring to FIG. 1, an extruder 10 may include a supply module (e.g., a supplier or a supply hopper) 100 that supplies an active material, a binder, and a conductive material, a mixing module (e.g., a mixer or a mixing device) 200 that forms an electrode slurry 30 by mixing the active material, the binder, and the conductive material provided from the supply module 100, a discharge module (e.g., a discharger or a discharge outlet) 300 that discharges the electrode slurry 30, and a sensor 250_1 (e.g., refer to FIG. 2) that measures a characteristic value of the electrode slurry 30. The extruder 10 may further include a tank 400 that accommodates the electrode slurry 30 discharged from the discharge module 300.

The supply module 100 may supply an active material, a binder, a conductive material, a solvent, and the like to the mixing module 200 for forming the electrode slurry 30. For example, the supply module 100 may distinguish a positive electrode and a negative electrode, and may supply an active material, a binder, and a conductive material used for each kind of electrode to the mixing module 200. The active material may be a positive electrode active material or a negative electrode active material. As another example, the supply module 100 may supply an active material, a binder, and a conductive material with different composition ratios to the mixing module 200 based on a capacity (e.g., a desired capacity) of a secondary battery being designed.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and may be applied to a high-capacity, high-density rechargeable lithium battery.

A positive electrode for a rechargeable lithium battery may include a current collector and a positive electrode active material layer on the current collector. The positive electrode active material layer may include a positive electrode active material and may further include a binder and/or a conductive material(e.g., an electrically conductive material).

For example, the positive electrode may further include an additive that may serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity(e.g., electrical conductivity) to the electrode. Any material that does not cause chemical change(e.g., does not cause an undesirable chemical change in the rechargeable lithium battery) and conducts electrons may be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity(e.g., electrical conductivity) to the electrode. Any material that does not cause chemical change(e.g., does not cause an undesirable chemical change in the rechargeable lithium battery) and conducts electrons may be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

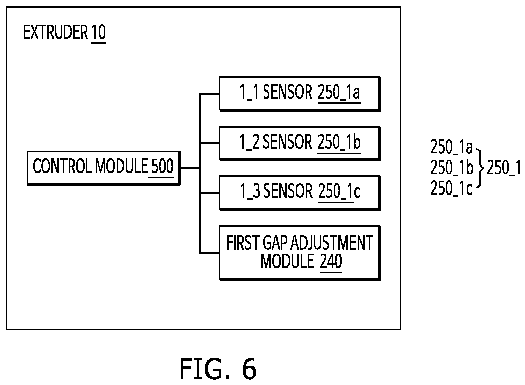

The mixing module 200 may form the electrode slurry 30 by mixing the active material, the binder, and the conductive material supplied from the supply module 100. The mixing module 200 may include a first screw 211, a second screw 212, a barrel 220, a first gap adjustment module (e.g., a first gap adjuster) 240 (e.g., refer to FIG. 2), and a control module (e.g., a controller) 500 (e.g., refer to FIG. 6). In this case, the mixing module 200 may further include a driving motor 213 that rotatably drives the first screw 211 and the second screw 212.

The first screw 211 and the second screw 212 may be disposed parallel to or substantially parallel to each other in a longitudinal direction (e.g., the X-axis direction) of the mixing module 200, and screw threads formed on an outer circumference may rotate to engage with each other. The first screw 211 and the second screw 212 may be accommodated in a hole 230 (e.g., refer to FIG. 2) formed in the barrel 220.

According to some embodiments, the barrel 220 may include a first barrel and a second barrel accommodating the first screw 211 and the second screw 212, and may be arranged to face each other in a direction of a height (Y) of the mixing module 200 to form a hole through which the electrode slurry 30 is transmitted. The first barrel and the second barrel may be coupled or arranged in the direction of height (Y) of the mixing module 200 to face each other to form a hole through which the electrode slurry 30 is transmitted in a longitudinal direction (X) of the mixing module 200. The first gap adjustment module 240 may adjust a gap between the first barrel and the second barrel in the height direction (Y) of the mixing module 200. The control module 500 may control the first gap adjustment module 240 based on a characteristic value (e.g., a physical property value) of the electrode slurry measured by the sensor 250. This will be described in more detail below with reference to FIG. 2 to FIG. 9.

The driving motor 213 may be connected to the first screw 211 and the second screw 212 to provide a rotational driving force to the first screw 211 and the second screw 212. The rotational driving force of the driving motor 213 may be appropriately set according to any one of the components or contents of the active material, the binder, and the conductive material being mixed. For example, the torque of the driving motor 213 may be differently set according to a composition ratio of the active material, the binder, and the conductive material

The discharge module 300 may discharge the electrode slurry 30 manufactured by mixing the active material, the binder, and the conductive material in the mixing module 200 to a tank 400. The discharge module 300 may discharge the electrode slurry 30 in which the active material, the binder, and the conductive material are evenly or substantially evenly distributed to the tank 400.

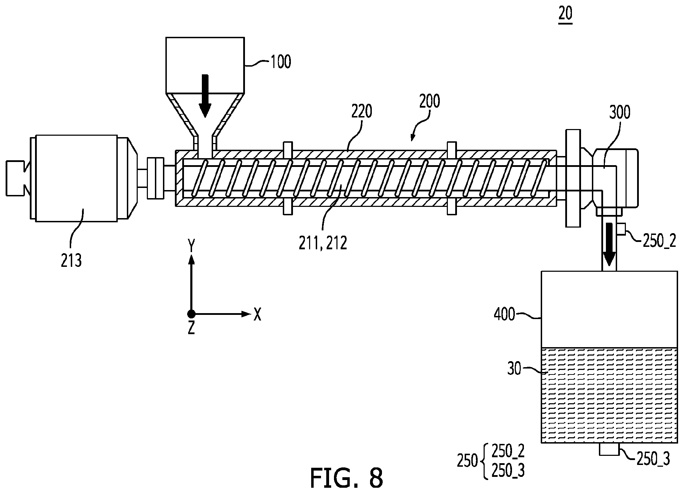

According to some embodiments, the sensor 250 may include a first sensor 250_1 (e.g., see FIG. 2), a second sensor 250_2 (e.g., refer to FIG. 8), and a third sensor 250_3. The first sensor 250_1 may measure a first characteristic value of the electrode slurry 30 transmitted through the hole 230 of the barrel 220. The second sensor 250_2 may measure a second characteristic value of the electrode slurry 30 discharged from the discharge module 300. The third sensor 250_3 may measure a third characteristic value of the electrode slurry 30 accommodated in the tank 400. This will be described in more detail below with reference to FIG. 2 and FIG. 8.

According to some embodiments, the extruder 10 may include the supply module 100 that supplies the active material, the binder, and the conductive material, the mixing module 200 that forms the electrode slurry 30 by mixing the active material, the binder, and the conductive material supplied from the supply module 100, the discharge module 300 that discharges the electrode slurry 30, and the sensor 250 that measures the characteristic value of the electrode slurry 30. The mixing module 200 may include the pair of screws 211 and 212 arranged in parallel to or substantially parallel to each other in the longitudinal direction (e.g., the X-axis direction) of the mixing module 200, in which the screw threads formed on the outer circumference rotate to engage with each other, the barrel 220 that accommodates the pair of screws 211 and 212 and forms the hole through which the electrode slurry 30 is transmitted, and adjust a clearance (e.g., a gap) between the pair of screws 211 and 212 and the inner circumference of the hole, and the control module 500 that controls the barrel 220 to adjust the clearance based on the measured characteristic value. The barrel 220 may include a first area adjacent to the supply module 100, a third area adjacent to the discharge module 300, and a second area interposed between the first area and the third area. The control module may control the barrel 220 to adjust the clearance in at least one of the first area, the second area, or the third area based on the measured characteristic value.

As described above, an extruder may be provided by setting a shear force applied to the electrode slurry by adjusting the clearance corresponding to the gap between the inner surface of the barrel of the mixing module and the screws. In addition, the physical property value of the finally manufactured electrode slurry may be set by measuring the physical property value of the electrode slurry by using the sensor mounted in the extruder, and adjusting the clearance according to the measured physical property value.

FIG. 2 is a cross-sectional view illustrating an example of a mixing module according to some embodiments of the present disclosure.

Referring to FIG. 2, the mixing module 200 may include the first screw 211, the second screw 212, the barrel 220, the first gap adjustment module 240, and the control module 500 (e.g., refer to FIG. 6). The mixing module 200 may further include the driving motor 213 that rotatably drives the first screw 211 and the second screw 212.

According to some embodiments, the first screw 211 and the second screw 212 may rotatably rotate by a driving force transmitted from the driving motor 213. The first screw 211 and the second screw 212 may rotate to mix and move the active material, the binder, and the conductive material supplied into the barrel 220 to the discharge module 300. For example, an active material, a binder, and a conductive material may flow into screw grooves of the first screw 211 and the second screw 212. By the rotation of the first screw 211 and the second screw 212, the active material, the binder, and the conductive material flowing into the screw grooves may be mixed and moved in the X-axis direction.

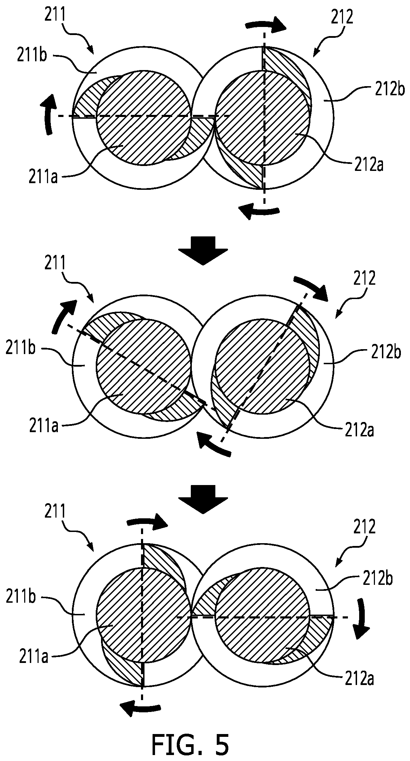

According to some embodiments, the rotational axes of the first screw 211 and the second screw 212 may arranged to be parallel to or substantially parallel to each other. A screw thread may be formed in a spiral shape in the X-axis direction on the rotation axis of each of the first screw 211 and the second screw 212. The screw threads of the first screw 211 and the second screw 212 may rotate in the same direction as each other while engaging with each other. This will be described in more detail below with reference to FIG. 5.

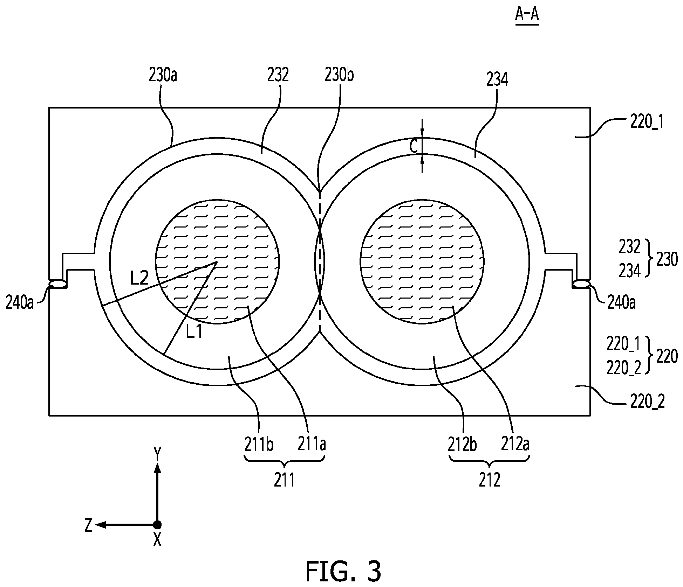

The barrel 220 may and include a first barrel 220_1 (e.g., refer to FIG. 3) and a second barrel 220_2 disposed to face each other in a height direction (e.g., the Y-axis direction) of the mixing module 200 to form a hole 230, and accommodating the first screw 211 and the second screw 212 through which an electrode slurry 30 (e.g., refer to FIG. 1) is transmitted. An active material, a binder, and a conductive material may be mixed in the hole 230 formed inside the barrel 220. The gap between the inner circumference of the hole and the first screw 211 and the second screw 212 may be a passage through which the active material, the binder, and the conductive material are transmitted from the supply module 100 to the discharge module 300.

According to some embodiments, a fluid mixed with the active material, the binder, the conductive material, and the solvent may move in the X-axis direction by a rotation of the first screw 211 and the second screw 212 in the barrel 220. A shear force by the rotation of the first screw 211 and the second screw 212 may be transmitted to the fluid at the gap between the hole 230 of the barrel 220 and the first screw 211 and the second screw 212.

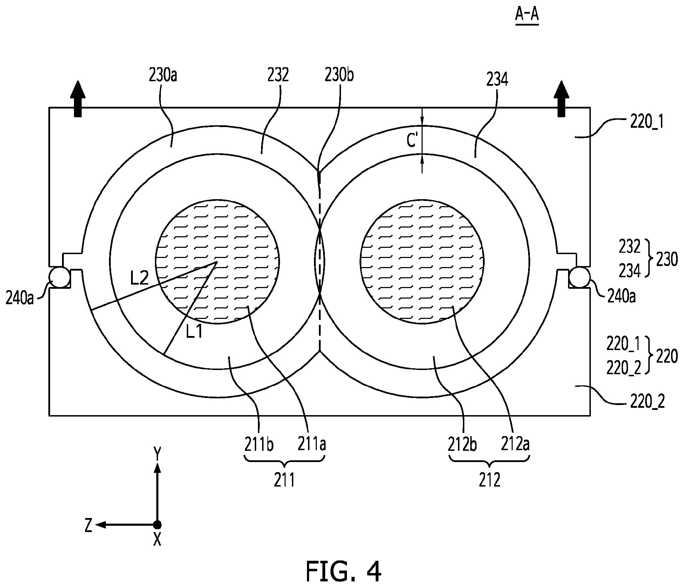

According to some embodiments, the hole 230 of the barrel 220 may include a first hole accommodating the first screw 211, and a second hole accommodating the second screw 212, and the first and second holes may be connected in the area where the first screw 211 and the second screw 212 are engaged. This will be described in more detail below with reference to FIG. 3 and FIG. 4.

According to some embodiments, the barrel 220 may include a first area 220a adjacent to the supply module (e.g., 100, see FIG. 1), a third area 220c adjacent to the discharge module 300, and a second area 220b disposed between the first area 220a and the third area 220c. The first area 220a may be a conveying section in which the active material, the binder, and the conductive material are supplied and transmitted. The second area 220b may be a kneading section in which a strong shear force is applied to the active material, the binder, and the conductive material. The third area 220c may be a mixing section in which the active material, the binder, and the conductive material are crushed or dispersed.

According to some embodiments, the gap between the first barrel 220_1 and the second barrel 220_2 may be adjusted independently in each of the first area 220a to the third area 220c of the barrel 220. In more detail, the gap between the first barrel 220_1 and the second barrel 220_2 in the first area 220a may be adjusted by a first gap adjustment module 240a. The gap between the first barrel 220_1 and the second barrel 220_2 in the second area 220b may be adjusted by a first gap adjustment module 240b. The gap between the first barrel 220_1 and the second barrel 220_2 in the third area 220c may be adjusted by a first gap adjustment module 240c.

According to some embodiments, the gaps between the first area 220a to the third area 220c may be sealed. For example, sealing members may be placed to seal between the first area 220a and the second area 220b, and between the second area 220b and the third area 220c.

According to some embodiments, the first gap adjustment module 240 may include the first gap adjustment module 240a located in the first area 220a, the first gap adjustment module 240b located in the second area 220b, and the first gap adjustment module 240c located in the third area 220c. However, the configuration of the first gap adjustment module 240 is not limited thereto, and may include only one or two from among the first gap adjustment modules 240a, 240b, and/or 240c.

The sensor 250 may include the first sensor 250_1 that measures a first characteristic value of an electrode slurry transmitted through the hole 230 of the barrel 220. The first characteristic value may include at least one of a pressure value or a temperature value.

According to some embodiments, the first sensor 250_1 may include a 1_1 sensor 250_1a that measures a first characteristic value of the electrode slurry transmitted through the hole 230 of the first area 220a, a 1_2 sensor 250_1b that measures a first characteristic value of the electrode slurry transmitted through the hole 230 of the second area 220b, and a 1_3 sensor 250_1c that measures a first characteristic value of the electrode slurry transmitted through the hole 230 of the third area 220c. However, the configuration of the first sensor 250_1 is not limited thereto, and the first sensor 250_1 may include only one or two of the 1_1 sensor 250_1a, the 1_2 sensor 250_1b, and/or the 1_3 sensor 250_1c.

According to some embodiments, the control module 500 may control the first gap adjustment module 240 based on the measured characteristic value. In more detail, the control module 500 may compare the first characteristic value measured by the first sensor 250_1 with a reference value, and may transmit a control signal to change the gap between the first barrel 220_1 and the second barrel 220_2 to the first gap adjustment module 240 based on the comparison result between the first characteristic value measured by the first sensor 250_1 and the reference value. This will be described in more detail below with reference to FIG. 6.

FIG. 3 is a cross-sectional view taken along the line A-A of FIG. 2 before a gap between a first barrel and a second barrel increases. FIG. 4 is a cross-sectional view taken along the line A-A of FIG. 2 after the gap between the first barrel and the second barrel increases.

FIG. 3 and FIG. 4 focus on the first area 220a shown in FIG. 2 for convenience of illustration, but the second area 220b and the third area 220c in FIG. 2 may be the same or substantially the same as (or similar to) the first area 220a, and thus, redundant description thereof may not be repeated.

Referring to FIGS. 3 and 4, the barrel 220 may include a first barrel 220_1 and a second barrel 220_2 arranged to face each other in the height direction (e.g., the Y-axis direction) of the mixing module 200 to form a hole 230 in which a first screw 211 and a second screw 212 are accommodated, and through which an electrode slurry 30 (e.g., refer to FIG. 1) is transmitted. The hole 230 of the barrel 220 may include a first hole 232 for accommodating the first screw 211, and a second hole 234 for accommodating the second screw 212. The first hole 232 and the second hole 234 may be connected to each other in an area 230b in which the first screw 211 and the second screw 212 are engaged with each other.

According to some embodiments, a rotation axis 211a of the first screw 211 and a rotation axis 212a of the second screw 212 may be placed in parallel to or substantially in parallel to each other in a longitudinal direction (e.g., the X-axis direction) of the mixing module 200. A screw thread 211b of the first screw 211 and a screw thread 212b of the second screw 212 may rotate in the same direction as each other by engaging each other.

According to some embodiments, the gap between an inner circumference 230a of the hole 230 and the first screw 211 and the second screw 212 may be equal to or substantially equal to a length L1 of the outer radius (e.g., the outer radius of the screw) of each of the first screw 211 and the second screw 212, subtracted by a length L2 of the inner radius of each of the first hole 232 and the second hole 234. A gap may be formed between the outer diameters of the first screw 211 and the second screw 212 and the inner circumference 230a of the hole 230, so that the first screw 211 and the second screw 212 may rotate, and the fluid mixed with the active material, the conductive material, and the binder may flow. The gap between the inner circumference 230a of the hole 230 and the first screw 211 and the second screw 212 may be referred to as a 'clearance'.

According to some embodiments, the clearance may be controlled by the first gap adjustment module 240a disposed between the first barrel 220_1 and the second barrel 220_2. The first gap adjustment module 240a may be a pneumatic control device. The first gap adjustment module 240a may include a tube and an extruder. A volume of the tube may be controlled by the extruder, thereby controlling the clearance due to a volume change of the tube. However, the pneumatic control device is not limited thereto, and may be formed of various suitable configurations.

The clearance may be one of the important elements that determine a shear force applied to the electrode slurry. When the clearance is small, the shear force applied to the electrode slurry may be great, and when the clearance is great, the shear force applied to the electrode slurry may be small.

The physical property value of the electrode slurry may be determined by the shear force applied to the electrode slurry. When the shear force applied to the electrode slurry is small, the internal pressure of the electrode slurry may be small, which prevents or substantially prevents the electrode slurry from being properly dispersed. When the shear force applied to the electrode slurry is great, the internal pressure of the electrode slurry may be great, so that the electrode slurry may be excessively dispersed.

Therefore, the clearance may vary depending on the physical property value (e.g., the desired physical property value) of the targeted electrode slurry. As shown in FIG. 3, according to the physical property value of the electrode slurry, a clearance C may be adjusted to be reduced by the first gap adjustment module 240a. Similarly, as shown in FIG. 4, a clearance C' may be adjusted to be increased by the first gap adjustment module 240a according to the physical property value of the electrode slurry. For example, the clearance may be adjusted in the range from 0.05mm to 5mm. Therefore, after the physical property value of the electrode slurry that moves from an extruder 10 (e.g., refer to FIG. 1) is measured, the clearance may be adjusted according to the measured physical property value, thereby optimizing or improving the physical property value of the finally manufactured electrode slurry.

FIG. 5 is a view illustrating an example in which a first screw and a second screw are arranged according to some embodiments of the present disclosure.

Referring to FIG. 5, a rotation axis 211a of a first screw 211 and a rotation axis 212a of a second screw 212 may be placed in parallel to or substantially in parallel to each other. A screw thread 211b of the first screw 211 and a screw thread 212b of the second screw 212 may rotate in the same direction as each other while engaging with each other.

According to some embodiments, the first screw 211 and the second screw 212 may have an elliptical cross-section, and the long axis of the first screw 211 and the long axis of the second screw 212 may be arranged vertically and engaged to rotate in the elliptical cross-section.

For example, the first screw 211 may rotate so that the long axis of the first screw 211 may have angles of 0 degrees, 45 degrees, and 90 degrees from the horizontal line. The second screw 212 may rotate while engaging with the first screw 211, so that the long axis of the second screw 212 may have angles of 90 degrees, 45 degrees, and 0 degrees from the horizontal line.

FIG. 6 is a view illustrating an example of a control module electrically connected to a first sensor and a first gap adjustment module according to some embodiments of the present disclosure.

Referring to FIG. 6, the control module 500 may be electrically connected to a first sensor 250_1 and a first gap adjustment module 240. The first sensor 250_1 may include a 1_1 sensor 250_1a, a 1_2 sensor 250_1b, and a 1_3 sensor 250_1c.

According to some embodiments, the 1_1 sensor 250_1a may measure a first characteristic value of an electrode slurry transmitted through a hole 230 (e.g., refer to FIG. 2) of a first area 220a. The 1_2 sensor 250_1b may measure a first characteristic value of an electrode slurry transmitted through a hole 230 of a second area 220b (e.g., refer to FIG. 2). The 1_3 sensor 250_1c may measure a first characteristic value of an electrode slurry transmitted through a hole 230 of a third area 220c (e.g., refer to FIG. 2). The first characteristic value may include at least one of a pressure value or a temperature value. However, the first characteristic value is not limited thereto, and may include various suitable characteristic values.

According to some embodiments, the control module 500 may compare a first characteristic value measured by the first sensor 250_1 with a reference value, and may transmit a control signal for changing the gap between the first barrel 220_1 (e.g., refer to FIG. 3) and the second barrel 220_2 in each of the first area 220a to the third area 220c to the first gap adjustment module 240, based on the comparison result between the first characteristic value measured by the first sensor 250_1 and the reference value.

The reference value may be set to various suitable numerical ranges depending on the target physical property value of the electrode slurry.

According to some embodiments, the control module 500 may compare a first characteristic value measured by the 1_1 sensor 250_1a with a reference value, and may transmit a control signal for changing the gap between the first barrel 220_1 (e.g., refer to FIG. 3) and the second barrel 220_2 in the first area 220a to the first gap adjustment module 240, based on the comparison result between the first characteristic value measured by the 1_1 sensor 250_1a and the reference value.

According to some embodiments, the control module 500 may compare a first characteristic value measured by the 1_2 sensor 250_1b with a reference value, and may transmit a control signal for changing the gap between the first barrel 220_1 and the second barrel 220_2 in the first area 220a or the second area 220b to the first gap adjustment module 240, based on the comparison result between the first characteristic value measured by the 1_2 sensor 250_1b and the reference value.

According to some embodiments, the control module 500 may compare a pressure value measured by the 1_2 sensor 250_1b with a reference value, and based on a result of determining that the pressure value measured by the 1_2 sensor 250_1b is smaller than the reference value, may transmit a control signal for increasing the gap between the first barrel 220_1 and the second barrel 220_2 in the first area 220a to the first gap adjustment module 240. As a result, the amount of electrode slurry transmitted from the first area 220a may be increased, thereby increasing the shear force applied to the electrode slurry in the second area 220b.

According to some embodiments, the sensor 250 may measure a pressure value of the electrode slurry, and the control module 500 may control the barrel 220 to allow the clearance to increase in the first area 220a when the pressure value of the second area 220b measured by the sensor 250 is smaller than a reference pressure value.

According to some embodiments, the control module 500 may compare the pressure value measured by the 1_2 sensor 250_1 b with a reference value, and based on a result of determining that the pressure value measured by the 1_2 sensor 250_1b is smaller than the reference value, may transmit a control signal for decreasing the gap between the first barrel 220_1 and the second barrel 220_2 in the second area 220b to the first gap adjustment module 240. As a result, the shear force applied to the electrode slurry may increase, so that the electrode slurry may be uniformly or substantially uniformly distributed.

According to some embodiments, the control module 500 may compare the pressure value measured by the 1_2 sensor 250_1b with a reference value, and based on the result of determining that the pressure value measured by the 1_2 sensor 250_1b is greater than the reference value, may transmit a control signal for increasing the gap between the first barrel 220_1 and the second barrel 220_2 in the second area 220b to the first gap adjustment module 240. As a result, the shear force applied to the electrode slurry may be reduced, so that the electrode slurry may be uniformly or substantially uniformly distributed. In addition, the extruder may be prevented or substantially prevented from being overloaded and deteriorated.

According to some embodiments, the control module 500 may compare the temperature value measured by the 1_2 sensor 250_1b with a reference value, and based on the result of determining that the temperature value measured by the 1_2 sensor 250_1b is greater than the reference value, a control signal for increasing the gap between the first barrel 220_1 and the second barrel 220_2 in the second area 220b may be transmitted to the first gap adjustment module 240. As a result, the load of the second area 220b may be reduced, thereby reducing the temperature of the electrode slurry.

According to some embodiments, the control module 500 may compare a first characteristic value measured by the 1_3 sensor 250_1c with a reference value, and based on the result of comparing between the first characteristic value measured by the 1_3 sensor 250_1c and the reference value, may transmit a control signal for changing the gap between the first barrel 220_1 and the second barrel 220_2 in the third area 220c to the first gap adjustment module 240.

According to some embodiments, the control module 500 may compare a temperature value measured by the 1_3 sensor 250_1c with a reference value, and based on a result of determining that the temperature value measured by the 1_3 sensor 250_1c is greater than the reference value, may transmit a control signal for increasing the gap between the first barrel 220_1 and the second barrel 220_2 in the third area 220c to the first gap adjustment module 240. As a result, the load of the third area 220c may be reduced, thereby reducing the temperature of the electrode slurry.

According to some embodiments, the sensor 250 may measure the temperature value of the electrode slurry, and the control module 500 may control the barrel 220 to allow the clearance to increase in the second area 220b or the third area 220c when the temperature value of the second area 220b or the third area 220c measured by the sensor 250 is greater than a reference temperature value.

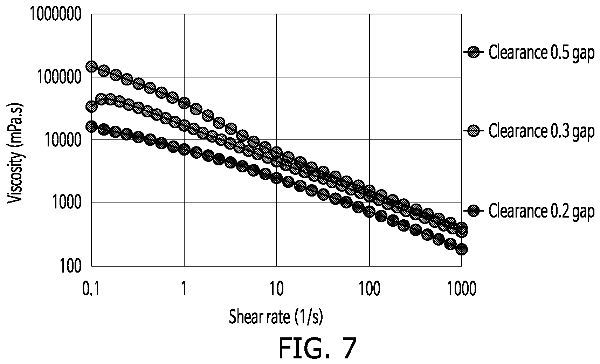

FIG. 7 is a graph of experimental data indicating a viscosity of an electrode slurry according to a gap between a first barrel and a second barrel according to some embodiments of the present disclosure.

FIG. 7 illustrates the experimental data for measuring the viscosity of the electrode slurry according to the clearance of the extruder. For example, the extruder may be a device for discharging an electrode slurry by mixing an active material, a conductive material, a binder, and a solvent supplied to a hole, which is an internal space of a barrel, by the rotation of a pair of screws as described above with reference to FIGS. 1 to 6. The gap between the inner circumference of the hole and the pair of screws may be referred to as a clearance. The horizontal axis of the experimental data may indicate the shear rate of the electrode slurry, and the vertical axis may indicate the viscosity of the electrode slurry.

As shown in FIG. 7, when the clearance is 0.3 mm, the viscosity of the electrode slurry may be greater than that of the electrode slurry when the clearance is 0.2 mm. In addition, when the clearance is 0.5 mm, the viscosity of the electrode slurry may be greater than that of the electrode slurry when the clearance is 0.3 mm. When the clearance is 0.2 mm, the viscosity of the electrode slurry may be the lowest, and when the clearance is 0.5 mm, the viscosity of the electrode slurry may be the highest.

As the clearance of the extruder becomes smaller, the viscosity of the electrode slurry may be reduced. This is because the shear force applied to the electrode slurry increases as the clearance of the extruder becomes smaller. Therefore, the viscosity of the electrode slurry may be properly set or determined by adjusting the clearance in the extruder.

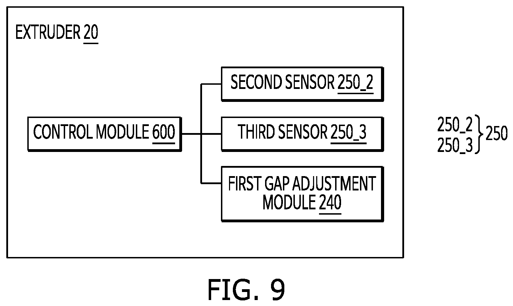

FIG. 8 is a view illustrating an example of an extruder including a second sensor and a third sensor according to some embodiments of the present disclosure. FIG. 9 is a view illustrating an example of a control module electrically connected to a second sensor, a third sensor, and a first gap adjustment module according to some embodiments of the present disclosure. Hereinafter, the same or substantially the same configurations and elements in FIGS. 8 and 9 as those described above with reference to FIGS. 1 to 6 may not be repeated.

Referring to FIG. 8, an extruder 20 may include a supply module (e.g., a supplier or a supply hopper) 100, a mixing module (e.g., a mixer or a mixing device) 200, and a discharge module (e.g., a discharger or a discharge outlet) 300. The extruder 20 may further include a tank 400 for accommodating an electrode slurry 30 discharged from the discharge module 300, and a sensor 250. The sensor 250 may further include a second sensor 250_2 that measures a second characteristic value of the electrode slurry 30 discharged from the discharge module 300, and a third sensor 250_3 that measures a third characteristic value of the electrode slurry 30 accommodated in the tank 400.

According to some embodiments, the second characteristic value may include at least one of a particle size value, a viscosity value, a density value, or a temperature value. The third characteristic value may include a weight value. However, the second characteristic value and the third characteristic value are not limited thereto, and may include various suitable characteristic values.

According to some embodiments, a control module (e.g., a controller) 600 may compare a second characteristic value measured by the second sensor 250_2 with a reference value, and may transmit a control signal that changes the gap between the first barrel 220_1 (e.g., refer to FIG. 3) and the second barrel 220_2 in the second area 220b (e.g., refer to FIG. 2) to the first gap adjustment module 240, based on the result of comparing the second characteristic value measured by the second sensor 250_2 with the reference value. The reference value may be set within a suitable numerical range according to the physical property value (e.g., the desire physical property value) of the target electrode slurry. For example, the viscosity value and the particle size value of the electrode slurry may be set to a numerical range ranging from 80% to 120% of the preset value. However, the reference value is not limited thereto, and may be set in various suitable ways depending on the kinds of the viscosity sensor and the particle sensor.

According to some embodiments, the control module 600 may compare the viscosity value and/or the particle size measured by the second sensor 250_2 with a reference value, and based on a result of determining that the viscosity value and/or particle size measured by the second sensor 250_2 is greater than the reference value, may transmit a control signal that decreases the gap between the first barrel 220_1 and the second barrel 220_2 in the second area 220b to the first gap adjustment module 240. As a result, the shear force applied to the electrode slurry may increase, and the viscosity value and/or the particle size of the electrode slurry may decrease, thereby ensuring an appropriate viscosity value and/or particle size of the electrode slurry.

The sensor 250 may measure the viscosity value of the electrode slurry, and the control module 600 may control the barrel 220 to reduce the clearance in the second area 220b or the third area 220c when the viscosity value measured by the sensor in the second area 220b or the third area 220c is greater than a reference viscosity value.

According to some embodiments, the control module 600 may compare the viscosity value and/or the particle size value measured by the second sensor 250_2 with a reference value, and based on a result of determining that the viscosity value and/or the particle value measured by the second sensor 250_2 is smaller than the reference value, may transmit a control signal to increase the gap between the first barrel 220_1 and the second barrel 220_2 in the second area 220b to the first gap adjustment module 240. The reference values of the particle sizes may be based on d10, d50, and d90. For example, d10, d50, and d90 may indicate size values corresponding to 10%, 50%, and 90% of a maximum value in the cumulative distribution of the particle sizes, respectively, and may reflect a degree of homogeneity of the electrode slurry. Therefore, the shear force applied to the electrode slurry may be reduced, and the viscosity value and/or the particle size of the electrode slurry may be increased, thereby ensuring an appropriate viscosity value and/or particle size of the electrode slurry.

The sensor 250 may measure the particle size of the electrode slurry, and the control module 600 may control the barrel 220 to increase the clearance in the second area 220b or the third area 220c when the particle size measured by the sensor 250 in the second area 220b or the third area 220c is smaller than a reference particle size.

The control module 600 may compare the second characteristic value measured by the second sensor 250_2 with a reference value, and may transmit a control signal that changes the gap between the first barrel 220_1 and the second barrel 220_2 in the third area 220c (e.g., refer to FIG. 2) to the first gap adjustment module 240 based on the result of comparing the second characteristic value measured by the second sensor 250_2 with the reference value.

The control module 600 may compare the viscosity value and/or the particle size measured by the second sensor 250_2 with a reference value, and may transmit a control signal that changes the gap between the first barrel 220_1 and the second barrel 220_2 in the third area 220c (e.g., refer to FIG. 2) to the first gap adjustment module 240, based on a determination that the viscosity value and/or the particle size measured by the second sensor 250_2 is greater than the reference value. The shear force applied to the electrode slurry may be increased, and the viscosity value and/or the particle size of the electrode slurry may be reduced, thereby ensuring the appropriate viscosity value and/or particle size of the electrode slurry.

The control module 600 may compare the viscosity value and/or the particle size measured by the second sensor 250_2 with a reference value, and may transmit a control signal that increases the gap between the first barrel 220_1 and the second barrel 220_2 in the third area 220c (e.g., refer to FIG. 2) to the first gap adjustment module 240, based on the determination that the viscosity value and/or particle size measured by the second sensor 250_2 is smaller than the reference value. The shear force applied to the electrode slurry may be reduced, and the viscosity value and/or the particle size of the electrode slurry may be increased, thereby ensuring the appropriate viscosity value and/or the particle size of the electrode slurry.

The control module 600 may compare a third characteristic measured by the third sensor 250_3 with a reference value, and may transmit a control signal that changes the gap between the first barrel 220_1 and the second barrel 220_2 in the third area 220c (e.g., refer to FIG. 2) to the first gap adjustment module 240, based on the result of comparing the third characteristic value measured by the third sensor 250_3 with the reference value.

The control module 600 may compare a weight value measured by the third sensor 250_3 with a reference value, and may transmit a control signal that reduces the gap between the first barrel 220_1 and the second barrel 220_2 in the third area 220c (e.g., refer to FIG. 2) to the first gap adjustment module 240, based on the determination that the weight value measured by the third sensor 250_3 is greater than the reference value. Therefore, the discharging amount of electrode slurry may be reduced to ensure an appropriate production volume.

The control module 600 may compare the weight value measured by the third sensor 250_3 with a reference value, and transmit a control signal that increases the gap between the first barrel 220_1 and the second barrel 220_2 in the third area 220c (e.g., refer to FIG. 2) to the first gap adjustment module 240, based on the determination that the weight value measured by the third sensor 250_3 is smaller than the reference value. Therefore, the discharging amount of electrode slurry may be increased to ensure an appropriate production volume.

According to some embodiments, the control module 600 may compare the characteristic values with the reference value by assigning priorities to the characteristic values measured by the second sensor 250_2 and the third sensor 250_3. The priorities may be set depending on a purpose. For example, when the production volume of the electrode slurry produced by the extruder is given priority, the measured characteristic values may be compared with the reference value in the order of a weight value, a viscosity value, a pressure value, a temperature value, and a particle size. As another example, when the maintenance of the durability of the extruder is given priority, the measured characteristic values may be compared with the reference value in the order of a pressure value, a viscosity value, a particle size, a temperature value, and a weight value.

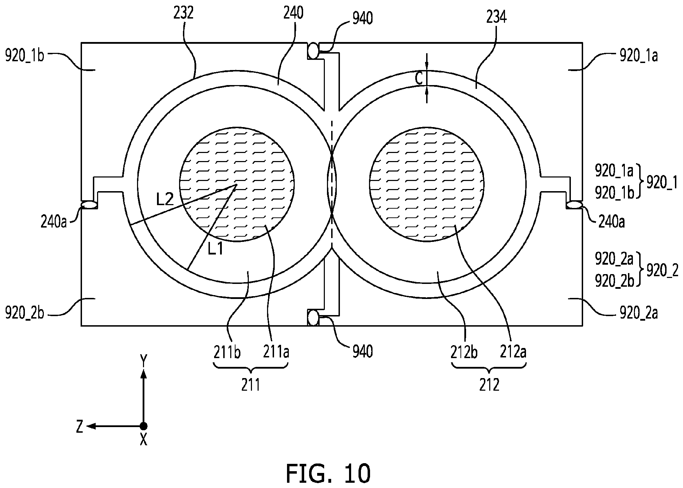

FIG. 10 is a view illustrating an example of an extrude further including a second gap adjustment module according to some embodiments of the present disclosure. Hereinafter, the same or substantially the same elements and configurations in FIG. 10 as those described above with reference to FIG. 2 may not be repeated.

According to some embodiments, the first barrel 920_1 may include a 1_1 barrel 920_1a and a 1_2 barrel 920_1b arranged to face each other in the width direction (e.g., the Z-axis direction) of the mixing module, and the second barrel 920_2 may include a 2_1 barrel 920_2a and a 2_2 barrel 920_2b arranged to face each other in the width direction (e.g., the Z-axis direction) of the mixing module.

According to some embodiments, the extruder further includes a second gap adjustment module 940 for adjusting the gap between the 1_1 barrel 920_1a and the 1_2 barrel 920_1b, and the gap between the 2_1 barrel 920_2a and the 2_2 barrel 920_2b in the width direction (e.g., the Z-axis direction) of the mixing module, and the control module 500 (e.g., refer to FIG. 6) may control the second gap adjustment module 940 based on the measured characteristic value. Accordingly, the control module of the extruder may improve the shear force applied to the electrode slurry by adjusting the gap in the width direction (e.g., the Z-axis direction) of the mixing module.

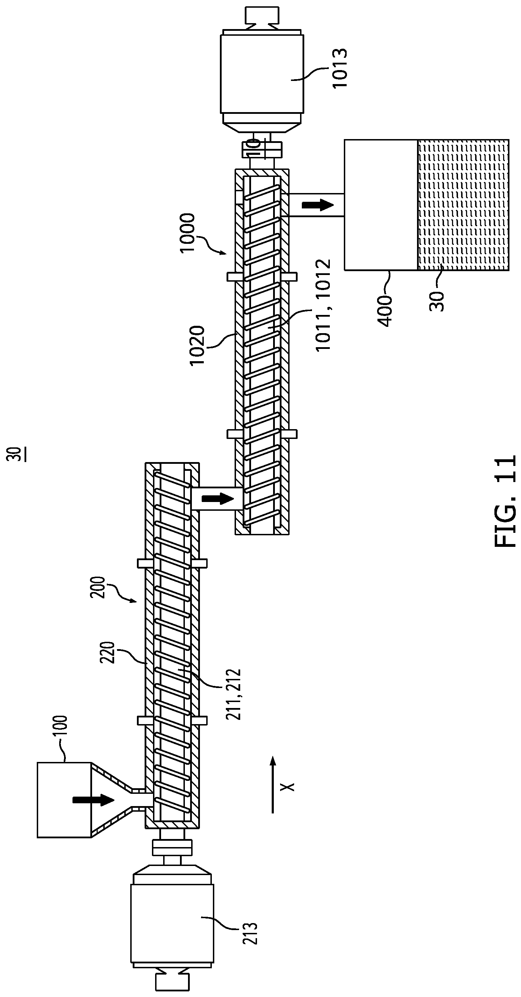

FIG. 11 is a view illustrating an example of an extruder including a multi-layered mixing module according to some embodiments of the present disclosure. Hereinafter, the same or substantially the same elements and configurations in FIG. 11 as those described above with reference to FIG. 1 may not be repeated.

Referring to FIG. 11, an extruder 40 may include a first mixing module (e.g., a first mixer or a first mixing device) 200, and a second mixing module (e.g., a second mixer or a second mixing device) 1000 connected to the first mixing module 200. However, the present disclosure is not limited thereto, and the extruder 40 may include the mixing module of three (3) or more layers.

According to some embodiments, the first mixing module 200 and the second mixing module 1000 each include the same or similar configuration as that of the mixing module 200 described above with reference to FIG. 1 to FIG. 11. The discharge module of the first mixing module 200 may be connected to a supply module of the second mixing module 1000, and the discharge module of the second mixing module 1000 may be connected to a tank 400 that accommodates an electrode slurry 30. A pair of screws 1011 and 1012 accommodated in the barrel of the second mixing module 1000 may rotatably rotate by a driving motor 1013.

The first mixing module 200 and the second mixing module 1000 may each further include one or more sensors that measure a characteristic value of the electrode slurry 30. The first mixing module 200 may include a pair of crews 211 and 212 parallel to or substantially parallel to each other in the longitudinal direction (e.g., the X-axis direction) of the first mixing module 200 with screw threads formed on the outer circumference rotating by engaging with each other, a barrel 220 for accommodating the pair of screws 211 and 212, a hole through which the electrode slurry 30 is transmitted and having an adjustable clearance between the pair of the screws 211 and 212 and the inner circumference of the hole, and a control module (e.g., a controller) that controls the barrel 220 to adjust the clearance. The barrel 220 may include a first area adjacent to the supply module 100, a third area adjacent to the discharge module, and a second area disposed between the first area and the third area. The control module may control the barrel 220 to adjust the clearance in at least one of the first area to the third area based on the measured characteristic value.

Similarly, the second mixing module 1000 may include a pair of screws 1011 and 1012 placed parallel to or substantially parallel to each other in the longitudinal direction (e.g., the X-axis direction) of the second mixing module 1000 with screw threads formed on the outer circumference rotating by engaging with each other, a barrel 1020 for accommodating the pair of screws 1011 and 1012, a hole through which the electrode slurry 30 is transmitted and having an adjustable clearance between the pair of screws 211 and 212 and the inner circumference of the hole, and a control module (e.g., a controller) that controls the barrel 220 to adjust the clearance based on the measured characteristic value. The barrel 1020 may include a first area adjacent to the discharge module of the first mixing module 200, a third area adjacent to the discharge module of the second mixing module 1000, and a second area interposed between the first area and the third area. The control module may control the barrel 1020 to adjust the clearance in at least one of the first area to the third area based on the measured characteristic value.

According to some embodiments of the present disclosure, an extruder may be provided that evenly or substantially evenly distributes the electrode slurry by setting (e.g., by changing) the shear force applied to the electrode slurry by adjusting the clearance corresponding to a gap between the inner circumference of the barrel of each of the mixing modules formed in multiple layers and the screw. In addition, the physical property value of the finally generated electrode slurry may be set or determined by measuring the physical property value of the electrode slurry using the sensor mounted in the extruder, and adjusting the clearance according to the measured physical property value.

The electronic or electric devices and/or any other relevant devices or components according to embodiments of the present disclosure described herein (e.g., the control module and the like) may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the example embodiments of the present disclosure.

Although the present disclosure has been described above with respect to embodiments thereof, the present disclosure is not limited thereto. Various modifications and variations may be made thereto by those skilled in the art within the present disclosure and the scope of the appended claims.

## Claims

1. An extruder (10) comprising:
a supply module (100) configured to supply an active material, a binder, and a conductive material;
a mixing module (200) configured to form an electrode slurry (30) by mixing the active material, the binder, and the conductive material supplied from the supply module;
a discharge module (300) configured to discharge the electrode slurry (30); and
a sensor (250) configured to measure a characteristic value of the electrode slurry (30),
wherein the mixing module (200) comprises:
a first screw (211) and a second screw (212) parallel to each other in a longitudinal direction of the mixing module (200), the first screw (211) and the second screw (212) comprising screw threads (211b, 212b) on an outer circumference thereof configured to rotate to engage with each other;
a barrel (220) comprising a first barrel (220_1) and a second barrel (220_2) accommodating the first screw (211) and the second screw (212), respectively, the first barrel (220_1) and the second barrel (220_2) facing each other in a height direction of the mixing module (200) to form a hole (230) through which the electrode slurry (30) is transmitted;
a first gap adjustment module (240) configured to adjust a gap between the first barrel (220_1) and the second barrel (220_2) in the height direction of the mixing module (200); and
a control module (500) configured to control the first gap adjustment module (240) based on the measured characteristic value.

2. The extruder (10) as claimed in claim 1, wherein the barrel (220) further comprises:
a first area (220a) adjacent to the supply module (100);
a third area (220c) adjacent to the discharge module (300); and
a second area (220b) between the first area (220a) and the third area (220c).

3. The extruder (10) as claimed in claim 2, wherein the sensor (250) comprises a first sensor (250_1) configured to measure a first characteristic value of the electrode slurry (30) transmitted through the hole (230) of the barrel (220), and
wherein the first characteristic value comprises at least one of a pressure value and a temperature value.

4. The extruder (10) as claimed in claim 3, wherein the first sensor (250_1) comprises:
a 1_1 sensor (250_1a) configured to measure the first characteristic value of the electrode slurry (30) transmitted through the hole (230) of the first area (220a);
a 1_2 sensor (250_1b) configured to measure the first characteristic value of the electrode slurry (30) transmitted through the hole (230) of the second area (220b); and
a 1_3 sensor (250_1c) configured to measure the first characteristic value of the electrode slurry (30) transmitted through the hole (230) of the third area (220c).

5. The extruder (10) as claimed in claim **4,** wherein the control module (500) is configured to:
compare the first characteristic value measured by the 1_1 sensor (250_1a) with a reference value; and
based on a result of the comparison between the first characteristic value measured by the 1_1 sensor (250_1a) and the reference value, transmit a control signal to the first gap adjustment module (240) to change the gap between the first barrel (220_1) and the second barrel (220_2) in the first area (220a).

6. The extruder (10, 20, 40) (10) as claimed in claim 4 or 5, wherein the control module (500) is configured to:
compare the first characteristic value measured by the 1_2 sensor (250_1b) with a reference value; and
based on a result of the comparison between the first characteristic value measured by the 1_2 sensor (250_1b) and the reference value, transmit a control signal to the first gap adjustment module (240) to change the gap between the first barrel (220_1) and the second barrel (220_2) in the second area (220b).

7. The extruder (10) as claimed in any of claims 4 to 6, wherein the control module (500) is configured to:
compare the first characteristic value measured by the 1_3 sensor (250_1c) with a reference value; and
based on a result of the comparison between the first characteristic value measured by the 1_3 sensor (250_1c) and the reference value, transmit a control signal to the first gap adjustment module (240) to change the gap between the first barrel (220_1) and the second barrel (220_2) in the third area (220c).

8. The extruder (10) as claimed in any of claims 1 to 7, wherein the sensor (250) comprises a second sensor (250_2) configured to measure a second characteristic value of the electrode slurry (30) discharged from the discharge module (300), and
wherein the second characteristic value comprises at least one of a particle size, a viscosity value, a density value, or a temperature value.

9. The extruder (10) as claimed in claim 8 when depending from any of claims 2 to 7, wherein the control module (500) is configured to:
compare the second characteristic value measured by the second sensor (250_2) with a reference value; and
based on a result of the comparison between the second characteristic value measured by the second sensor (250_2) and the reference value, transmit a control signal to the first gap adjustment module (240) to change the gap between the first barrel (220_1) and the second barrel (220_2) in the second area (220b).

10. The extruder (10) as claimed in claim 8 when depending from any of claims 2 to 7, or claim 9, wherein the control module (500) is configured to:
compare the second characteristic value measured by the second sensor (250_2) with a reference value; and
based on a result of the comparison between the second characteristic value measured by the second sensor (250_2) and the reference value, transmit a control signal to the first gap adjustment module (240) to change the gap between the first barrel (220_1) and the second barrel (220_2) in the third area (220c).

11. The extruder (10) as claimed in any of claims 1 to 10, further comprising a tank (400) configured to accommodate the electrode slurry (30) discharged from the discharge module (300),
wherein the sensor (250) further comprises a third sensor (250_3) configured to measure a third characteristic value of the electrode slurry (30) accommodated in the tank (400), and
wherein the third characteristic value comprises a weight value.

12. The extruder (10) as claimed in claim 11 when depending from any of claims 2 to 10, wherein the control module (500) is configured to:
compare the third characteristic value measured by the third sensor (250_3) with a reference value; and
based on a result of the comparison between the third characteristic value measured by the third sensor (250_3) and the reference value, transmit a control signal to the first gap adjustment module (240) to change the gap between the first barrel (220_1) and the second barrel (220_2) in the third area (220c).

13. The extruder (10) as claimed in any of claims 1 to 12, wherein the first barrel (920_1) comprises a 1_1 barrel (920_1a) and a 1_2 barrel (920_1b) facing each other in a width direction of the mixing module (200), and
wherein the second barrel (920_2) comprises a 2_1 barrel (920_2a) and a 2_2 barrel (920_2b) facing each other in the width direction of the mixing module (200).

14. The extruder (10) as claimed in claim 13, further comprising a second gap adjustment module (940) configured to adjust a gap between the 1_1 barrel (920_1a) and the 1_2 barrel (920_1b), and a gap between the 2_1 barrel (920_2a) and the 2_2 barrel (920_2b), in the width direction of the mixing module,
wherein the control module (500) is configured to control the second gap adjustment module (940) based on the measured characteristic value.

15. The extruder (10) as claimed in any of claims 1 to **14,** wherein the hole (230) of the barrel (220) comprises:
a first hole (232) accommodating the first screw (211); and
a second hole (234) accommodating the second screw (212), and
wherein the first hole (232) and the second hole (234) are connected to each other in an area (230b) where the first screw (211) and the second screw (212) engage with each other.
